(19) Europäisches Patentamt

European Patent Office

Office européen des brevets

(11) Numéro de publication: **0 072 064**
**B1**

(12) # FASCICULE DE BREVET EUROPEEN

(45) Date de publication du fascicule du brevet:
**14.05.86**

(21) Numéro de dépôt: **82200951.0**

(22) Date de dépôt: **26.07.82**

(51) Int. Cl.⁴: **B 29 C 55/26**

(54) **Procédé et appareillage pour la fabrication de tuyaux en matière plastique orientée moléculairement.**

(30) Priorité: **06.08.81 FR 8115427**

(43) Date de publication de la demande:
**16.02.83 Bulletin 83/7**

(45) Mention de la délivrance du brevet:
**14.05.86 Bulletin 86/20**

(84) Etats contractants désignés:
**AT BE CH DE FR GB IT LI NL SE**

(56) Documents cités:
**DE - A - 2 115 269**
**DE - B - 1 131 391**
**DE - C - 735 349**
**FR - A - 1 177 405**
**FR - A - 1 450 044**
**FR - A - 2 184 857**
**FR - A - 2 289 320**
**FR - A - 2 365 423**
**FR - A - 2 462 254**
**US - A - 1 871 490**
**US - A - 3 122 786**
**US - A - 3 160 130**
**US - A - 3 936 260**
**US - A - 4 098 857**

(73) Titulaire: **SOLVAY & Cie (Société Anonyme), Rue du Prince Albert, 33, B-1050 Bruxelles (BE)**

(72) Inventeur: **Obsomer, Marc, Avenue de l'Araucaria, 92, B-1020 Bruxelles (BE)**

## Description

La présente invention concerne un procédé et un appareillage pour fabriquer des tuyaux en matière plastique orientée moléculairement par expansion radiale au moyen d'un fluide, d'une section de tuyau en matière plastique non orientée se trouvant à une température à laquelle un étirage induit une orientation moléculaire.

On sait que l'on peut accroître les propriétés mécaniques d'articles en matière plastique, et notamment de tuyaux, en leur faisant subir un traitement d'étirage mono- ou biaxial à des températures bien déterminées que dépendent de la nature de la matière plastique dont l'article est constitué.

Ainsi, dans le brevet britannique GB-A-1 432 539 (YORKSHIRE IMPERIAL PLASTICS Ltd), on a proposé un procédé de fabrication de tuyaux en matière plastique orientée moléculairement, selon lequel on place une section de tuyau dans un moule dont les dimensions internes correspondent aux dimensions externes du tube orienté désiré, on porte cette section de tuyau à sa température d'orientation moléculaire par étirage, on exerce une pression interne pour la dilater radialement et appliquer sa paroi contre le moule et on refroidit ensuite le tuyau orienté ainsi produit sous pression dans le moule. Par ailleurs dans la demande de brevet FR-A-2 184 875, on a divulgué la fabrication d'un tuyau moléculairement orienté équipé d'un raccord terminal obtenu par le même procédé de moulage.

Ce procédé permet la production de tuyaux orientés présentant des propriétés mécaniques intéressantes mais il s'avère difficilement applicable pour des tuyaux de grande longueur. Dans ce cas, on n'obtient pas un tuyau orienté régulièrement sur toute sa longueur car le tuyau chaud de départ n'est pas centré durant sa dilatation. En outre, durant la mise sous pression, le gonflage et partant l'orientation moléculaire s'initient souvent à plusieurs endroits en même temps; ce phénomène, difficilement contrôlable, provoque des variations d'épaisseur importantes dans le sens longitudinal voire même des plis à la rencontre des deux fronts de dilatation. Enfin, ce procédé ne permet d'obtenir que des tuyaux présentant de faibles taux d'orientation longitudinale puisque la longueur du moule est sensiblement égale à celle de la section de départ. En outre dans le brevet US-A-3 160 130 on divulgue un procédé et un appareillage pour réaliser à froid des objets à partir d'un tube fermé à une extrémité dans lesquels le tube est expulsé progressivement d'un fourreau et mis en forme dans un moule sous l'action d'un fluide d'expansion.

La présente invention vise à fournir un procédé du même type que celui décrit dans le brevet GB-A-1 432 532 ou dans la demande de brevet FR-A-2 184 875 mais qui ne présente plus les inconvénients du procédé connu et qui permet la production de tuyaux orientés de grande longueur exempts de défaut et présentant des épaisseurs de paroi d'une parfaite constance ainsi qu'une orientation longitudinale contrôlée.

L'invention concerne donc un procédé pour la fabrication de tuyaux en matière plastique orientée moléculairement, selon lequel on place une section de tuyau dans un moule, on provoque l'expansion radiale de la section de tuyau portée à une température à laquelle un étirage induit une orientation moléculaire de la matière plastique au moyen d'un fluide que l'on introduit sous pression dans la section de tuyau après avoir obturé celle-ci à ses deux extrémités, on refroidit le tuyau résultant et on l'extrait du moule; selon l'invention, on enserre la section de tuyau dans un fourreau, on provoque un déplacement relatif du fourreau le long de la section de tuyau pendant qu'on y introduit le fluide, de manière à provoquer l'expansion radiale de la partie de la section de tuyau qui est progressivement libérée par le fourreau et on règle le frottement du fourreau sur la section et son déplacement relatif le long de la section de tuyau pour engendrer un étirage longitudinal de la section de tuyau.

Dans le procédé selon l'invention, l'amorçage de l'expansion radiale de la section de tuyau à orienter a toujours lieu à une extrémité et la bulle d'expansion formée s'étend progressivement le long de la section de tuyau, cette progression étant contrôlée par le déplacement relatif du fourreau le long de la section de tuyau. De ce fait, les défauts éventuels de la section de tuyau de départ sont sans influence majeure sur le processus d'orientation, puisque l'orientation se fait progressivement le long de la section de tuyau. De même, un défaut de conditionnement thermique est également sans influence sur l'orientation, puisque celle-ci est toujours initiée au même endroit et s'étend progressivement. En outre, la vitesse d'expansion radiale de la section de tuyau, c'est-à-dire la vitesse de déplacement du front d'expansion le long de la section de tuyau, peut être contrôlée de façon efficace.

De plus la section de tuyau de départ reste parfaitement centrée dans l'axe du moule, du fait qu'elle est soutenue jusqu'au moment de son expansion. Le procédé convient dès lors particulièrement bien pour fabriquer des tuyaux de grande longueur.

Dans le procédé selon l'invention, le fourreau et le moule ont pour fonction d'exercer, respectivement sur la section de tuyau et sur le tuyau expansé, une contre-pression contrebalançant la pression du fluide insufflé dans la section de tuyau; dans la zone de la section de tuyau, qui est en cours d'expansion, la contre-pression peut être exercée par tout moyen approprié, tel que, par exemple, un fluide auxiliaire maintenu sous pression dans une chambre annulaire délimitée entre le fourreau et le moule.

Dans le procédé selon l'invention, pour exercer la contre-pression sur la zone en cours d'expansion radiale de la section de tuyau, on préfère faire glisser cette zone sur une surface annulaire disposée à la sortie du fourreau et s'étendant en direction de la paroi interne du moule.

Dans le procédé selon l'invention, le déplacement relatif du fourreau le long de la section de tuyau peut être réalisé par tout moyen approprié. On peut par exemple, selon une première variante d'exécution, maintenir la section de tuyau et le moule immobile et faire coulisser le fourreau le long de la section de tuyau. Selon une deuxième variante, on maintient le fourreau immobile et on déplace conjointement le moule et la section de tuyau pour extraire celle-ci progressivement hors du fourreau. Selon une troisième variante, on maintient le fourreau et le moule immobile et on extrait progressivement la section de tuyau hors du fourreau et la déplace dans le moule. Selon une variante supplémentaire, on déplace simultanément le fourreau et la section de tuyau en sens opposés, le moule étant maintenu immobile.

Ces deux dernières variantes du procédé selon l'invention permettent d'utiliser un moule constitué de deux tronçons consécutifs, dont l'un, proche du fourreau, est maintenu à une température voisine de la température permettant une orientation moléculaire de la matière plastique et dont l'autre est refroidi pour figer et rigidifier le tuyau expansé.

Dans la forme d'exécution du procédé selon l'invention, le frottement du fourreau sur la section de tuyau et son déplacement relatif le long de la section de tuyau sont opérés de manière à engendrer un étirage longitudinal de la section de tuyau. Cette forme d'exécution du procédé selon l'invention permet la réalisation de tuyaux biorientés c'est-à-dire dont la matière plastique constitutive est orientée à la fois dans le sens périphérique et, de manière importante, dans le sens longitudinal. L'importance de l'orientation longitudinale peut être réglée par le choix des conditions opératoires, en particulier la rugosité de la paroi du fourreau, la nature de la matière plastique mise en œuvre, l'épaisseur de la paroi de la section de tuyau, la température de la section de tuyau, la vitesse de déplacement relatif du fourreau le long de la section de tuyau et la forme de la surface annulaire fixée sur le fourreau. En variante, on peut aussi agir sur l'importance de l'orientation longitudinale en interposant une couche en un matériau à fort coefficient de friction, entre la section de tuyau et le fourreau.

Le conditionnement thermique de la section de tuyau à orienter peut être effectué avant l'introduction de celle-ci dans le moule. Il peut par exemple être réalisé dans un four ou par trempage dans un bain thermostatisé à la température choisie. Il peut également être réalisé in situ dans le moule avant de procéder à l'expansion et dans ce cas, il peut avantageusement être obtenu par une circulation d'un fluide caloporteur en contact direct ou indirect avec la face interne, la face externe ou les deux faces simultanément de la paroi de la section de tuyau.

Il s'est révélé spécialement avantageux, après insertion de la section de tuyau dans le fourreau, de faire circuler un premier fluide caloporteur à l'intérieur de la section de tuyau, directement au contact de sa paroi et un second fluide caloporteur le long de la face externe de la paroi du fourreau. Ce fluide caloporteur peut être de la vapeur ou un liquide tel que de l'eau ou de l'huile.

Le fluide sous pression utilisé pour assurer l'expansion radiale peut être un gaz tel que de l'air comprimé, de la vapeur ou un mélange d'air comprimé et de vapeur, ou un liquide tel que de l'eau ou une huile. Ce fluide peut être à une température quelconque, comprise en général entre la température ambiante et la température d'orientation moléculaire de la matière plastique de la section de tuyau. On préfère cependant que le fluide soit à une température sensiblement égale à la température de la matière plastique.

Le procédé selon l'invention permet la production de tuyaux orientés biaxialement dont, en général, le taux d'orientation périphérique varie de 10 à 300% et le taux d'orientation longitudinale peut atteindre 100%. Pour des applications particulières, on peut néanmoins adapter le procédé de façon à obtenir des taux d'orientation plus élevés.

Le procédé selon l'invention peut être appliqué à des sections de tuyaux réalisées en une matière plastique quelconque pour autant que celle-ci soit filable et présente une plage de températures permettant une orientation moléculaire par étirage. A titre d'exemple de ces matières, on peut citer les matières plastiques vinyliques, oléfiniques et acryliques et les polyesters thermoplastiques. Il a été constaté que le procédé selon l'invention convient particulièrement bien pour les tuyaux réalisés à partir de résines à base de chlorure de vinyle, la température idéale d'orientation allant, dans ce cas, de 80 à 130 °C environ et, de préférence, de 90 à 120 °C.

Le procédé selon l'invention peut être appliqué à des sections de tuyau de n'importe quelles dimensions mais il se révèle particulièrement intéressant pour des sections de tuyau ayant un rapport longueur-diamètre supérieur à 40. Il s'applique à des tuyaux de profil circulaire, aussi bien qu'à des tuyaux possédant un autre profil, par exemple des tubes ou des profilés creux de section transversale ovale ou polygonale convexe ou concave.

L'invention concerne également un appareillage pour la mise en œuvre du procédé décrit ci-avant qui comporte un moule tubulaire dont les dimensions transversales correspondent à celles du tuyau à produire et qui est équipé d'un dispositif d'admission d'un fluide sous pression dans une zone du moule destinée à recevoir la section de tuyau à expanser radialement, d'un organe d'obturation et de préhension d'une extrémité de la section de tuyau dans le moule, d'un fourreau tubulaire qui débouche dans le moule par une extrémité ouverte en regard de l'organe d'obturation et de préhension et qui présente des dimensions transversales correspondant à celles de la section de tuyau qu'il est destiné à recevoir, et d'un moyen pour provoquer un déplacement axial relatif contrôlé du fourreau par rapport à l'organe d'obturation et de préhension, pour les écarter l'un de l'autre et extraire la section de tuyau du fourreau dans lequel l'extrémité ouverte du fourreau est équipée d'un piston annulaire monté à coulissement dans le moule et qui enserre la section de tuyau de manière que l'on puisse régler le frottement dudit fourreau sur ladite section de tuyau pour engendrer un étirage longitudinal de la section de tuyau par un déplacement relatif réglable dudit fourreau le long de la section de tuyau.

Dans l'appareillage selon l'invention, le moule et le fourreau peuvent être réalisés en n'importe quel matériau capable de résister, sans se déformer, à la pression du fluide insufflé dans la section de tuyau, dans les conditions d'application du procédé selon l'invention. Ils peuvent consister habituellement en des tubes métalliques, par exemple en acier.

Pour provoquer un étirage longitudinal de la section de tuyau pendant son expansion radiale pour y engendrer une orientation moléculaire dans le sens longitudinal, il peut être opportun d'utiliser un fourreau à paroi rugueuse.

Le moyen d'admission du fluide sous pression peut consister par exemple en un injecteur relié à un réservoir contenant le fluide (un gaz ou un liquide) à l'état pressurisé.

L'organe d'obturation et de préhension remplit la double fonction d'obturer la section de tuyau pendant qu'on y introduit le fluide sous pression et de retenir la section de tuyau pendant le déplacement relatif du fourreau le long de la section de tuyau. Il peut par exemple consister en une mâchoire destinée à enserrer l'extrémité de la section de tuyau ou en un bouchon que l'on visse ou colle sur l'extrémité de la section de tuyau.

Le piston annulaire peut être de formes diverses et être notamment un disque perpendiculaire à l'axe du fourreau.

Toutefois, selon un mode de réalisation préféré de l'invention, le piston annulaire présente une surface disposée à la sortie du fourreau et s'étendant vers la paroi interne du moule de forme générale tronconique et évasée en direction de l'organe d'obturation et de préhension. De préférence, l'angle du cône est compris entre 15 et 75°. La surface peut être galbée.

Le moyen pour provoquer le déplacement axial relatif du fourreau par rapport à l'organe d'obturation et de préhension n'est pas critique et, comme exposé plus haut, il peut être conçu pour provoquer, par exemple, le déplacement du fourreau vis-à-vis de l'organe d'obturation et de préhension qui est maintenu fixe, ou vice versa. A titre d'exemple, ce moyen peut consister en une paire de rouleaux agissant sur le fourreau pour l'éloigner de l'organe d'obturation et de préhension, une paire de rouleaux agissant sur le moule ou sur le tuyaux expansé et refroidi, à la sortie du moule, pour l'éloigner du fourreau, un vérin mécanique, hydraulique ou pneumatique interposé entre le fourreau et l'organe d'obturation et de préhension, ou un moteur électrique ou fluidique agissant sur le fourreau ou sur l'organe d'obturation et de préhension.

Pendant l'exploitation de l'appareillage selon l'invention pour exécuter le procédé selon l'invention, il convient d'obturer aussi l'extrémité libre de la section de tuyau. Le moyen mis en œuvre à cet effet n'est pas critique; on peut par exemple pincer l'extrémité libre de la section de tuyau dans une mâchoire ou la souder.

Selon une forme de réalisation avantageuse de l'appareillage selon l'invention, le fourreau est obturé à une extrémité, de manière qu'il forme un obturateur de l'extrémité libre de la section de tuyau; le moyen pour provoquer le déplacement axial relatif contrôlé du fourreau par rapport à l'organe d'obturation et de préhension comprend, d'une part, le dispositif d'admission de fluide, qui est solidarisé à l'organe d'obturation et de préhension et, d'autre part, un dispositif d'amortissement du déplacement. Ce dispositif peut avantageusement être un amortisseur fluidique comprenant un second piston solidaire du moule et monté à coulissement sur le fourreau et un conduit calibré d'échappement d'un fluide emprisonné dans la chambre annulaire à volume variable délimitée entre le fourreau, le moule et les deux pistons.

Dans cette forme de réalisation de l'invention, le piston solidaire du fourreau est de préférence situé au voisinage immédiat de l'extrémité ouverte du fourreau et s'étend jusqu'à la paroi interne du moule. Selon un autre mode de réalisation, le fourreau peut être équipé d'un dispositif d'amortissement monté sur son extrémité opposée à l'organe d'obturation ou de préhension.

L'appareillage conforme à l'invention et son fonctionnement sont par ailleurs explicités plus en détail dans la description qui va suivre de deux modes de réalisation pratique.

Dans cette description, on se référera aux figures des dessins annexés dans lesquelles:

la fig. 1 est une vue en coupe d'un premier mode de réalisation de l'appareillage conforme à l'invention dans sa position avant expansion de la section de tuyau;

la fig. 2 est une vue en coupe de l'appareillage selon la fig. 1 dans sa position en fin d'opération d'expansion; et

la fig. 3 est une vue en coupe d'un second mode de réalisation de l'appareillage conforme à l'invention dans sa position avant expansion.

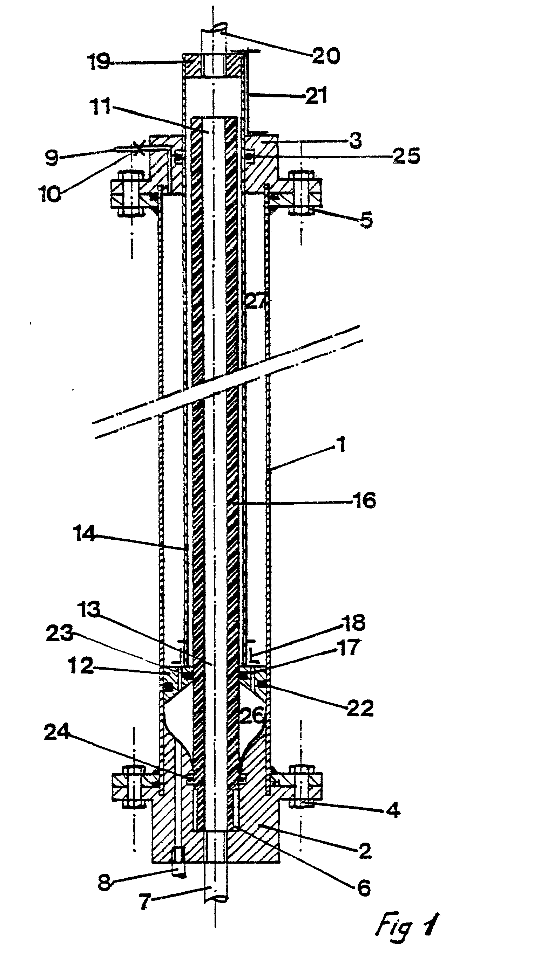

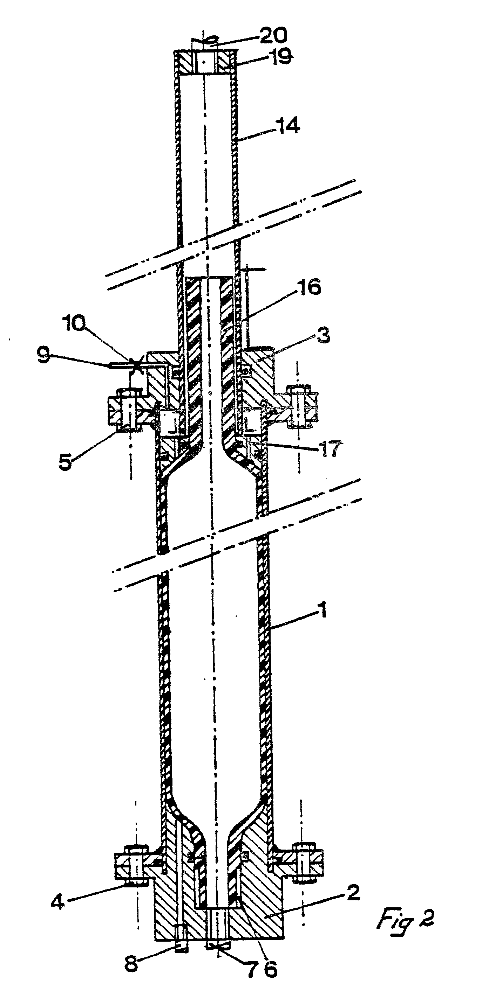

Ainsi qu'il apparaît aux figs 1 et 2, l'appareillage conforme à l'invention, selon un premier mode de réalisation pratique, comporte un moule constitué extérieurement d'une enveloppe tubulaire 1 bridée à ses extrémités et de deux couvercles 2, 3 fixés de façon amovible par des boulons 4, 5 aux brides de l'enveloppe tubulaire 1.

Le diamètre interne de l'enveloppe tubulaire 1 correspond au diamètre externe du tuyau orienté que l'on désire produire.

Le premier couvercle présente un logement central interne fileté 6 pour y fixer une section de tuyau 16, une tubulure axiale 7 débouchant dans le logement 6 et une tubulure latérale 8 débouchant à l'extérieur du logement 6 et dans l'enveloppe tubulaire 1.

Le second couvercle 3 est pourvu d'une tubulure périphérique 9 débouchant dans le moule et équipée d'une vanne réglable 10 et il comporte une ouverture centrale 11.

L'appareillage comporte en outre un fourreau tubulaire 14 disposé axialement dans l'enveloppe 1 et fixé, à une extrémité, sur un piston annulaire 12 pouvant coulisser axialement dans l'enveloppe 1. L'ouverture centrale circulaire 13 du piston 12 et le diamètre interne du fourreau 14 correspondent sensiblement au diamètre externe de la section de tuyau 16 à orienter moléculairement par expansion radiale. Le piston 12 est en outre percé de tubulures longitudinales 17 qui sur la face arrière du piston sont équipées de clapets antiretour 18.

Le fourreau 14 est monté à coulissement dans l'ouverture centrale 11 prévue dans le couvercle 3, qui constitue de la sorte un second piston, solidaire de l'enveloppe 1 du moule. La longueur du fourreau 14 est telle que celui-ci débouche par cette ouverture centrale 11 lorsque le piston 12 se trouve à proximité du couvercle 2. L'extrémité du fourreau 14 opposée au piston 12 est équipée d'un bouchon d'obturation 19 pourvu d'une tubulure 20 éuipée d'une vanne non représentée, de manière à former un obturateur de la section de tuyau 16.

Des joints toriques 22 et 25 assurent l'étanchéité entre les pistons 3 et 12, l'enveloppe 1 et le fourreau 14, de manière à délimiter une chambre annulaire 27 de volume variable. Des joints toriques 23 et 24 sont également prévus pour assurer une fixation étanche de la section de tuyau 16 au couvercle 2 et son passage étanche à travers l'ouverture interne 13 du piston 12. Le couvercle ou piston 3 est en outre équipé d'un verrou 21 qui permet de bloquer le fourreau 14 lorsque le piston 12 se trouve à proximité du couvercle 2. Pour exploiter l'appareillage des figures 1 et 2 en vue de produire un tuyau orienté, il convient de détacher le couvercle 2 de l'enveloppe tubulaire 1 et de fixer, par exemple par vissage, l'extrémité d'une section de tuyaux 16 en matière plastique dans le logement fileté 6. Ensuite la section de tuyau est introduite par l'autre extrémité dans l'appareillage de façon telle que celle-ci traverse le piston 12 et se loge dans le fourreau 14. Le couvercle 2 est alors à nouveau fixé sur l'enveloppe 1 et le piston 12 est amené dans la position illustrée à la fig. 1 et bloqué en place par l'intermédiaire du verrou 21 agissant sur l'extrémité du fourreau 14. La section de tuyau 16 ainsi enfermée dans l'appareillage est alors amenée à la température d'orientation de la matière plastique par une circulation d'un fluide à température adéquate tel que de l'huile. Ce fluide est introduit via les tubulures 7 et 8, circule à l'intérieur de la section de tuyau 16 et dans la chambre annulaire 27 via notamment les tubulures 17 et est repris par les tubulures 9 et 20. Lorsque la section de tuyau 16 a atteint sa température d'orientation on interrompt la circulation du fluide caloporteur, on ferme la vanne 10 de la tubulure 9 et on met la tubulure 8 à l'air libre de façon à purger la chambre 26 de son fluide. Il convient de noter que le fluide reste par contre emprisonné dans l'espace 27 puisque les clapets 18 empêchent son écoulement par les tubulures 17.

Pour initier l'expansion de la section de tuyau 16 il convient alors de débloquer le verrou 21 et d'augmenter la pression du fluide introduit dans la section de tuyau 16 via la tubulure 7, la vanne d'évacuation 20 étant fermée. De ce fait, la portion de la section de tuyau se trouvant dans la chambre 26 située en aval du fourreau 14 et du piston 12 se dilate radialement et vient s'appliquer sur le contour externe de cette chambre 26, tandis que la partie restante de la section de tuyau 16 est retenue latéralement par le fourreau 14 et ne se déforme pas. En outre, durant cette expansion radiale initiale de la section de tuyau, le piston 12 ne peut pas se déplacer puisqu'il est bloqué par le fluide enfermé dans la chambre 27. Pour provoquer et contrôler la progression de l'expansion le long de la section de tuyau 16, il suffit alors d'ouvrir la vanne 10 de façon prédéterminée afin d'éliminer progressivement le fluide enfermé dans la chambre 27. Le piston 12 et le fourreau 14 peuvent dès lors se déplacer progressivement à une vitesse prédéterminée vers le couvercle 3, sous l'action du fluide injecté via la tubulure 7 autorisant ainsi une expansion progressive de toute la section de tuyau 16 jusqu'au diamètre de l'enveloppe tubulaire 1.

Le déplacement du piston 12 et du fourreau 14 est amorti par l'échappement réglé, via la tubulure 9 et la vanne 10, du fluide contenu dans la chambre 27, ce qui permet de régler à la valeur choisie, la vitesse du déplacement, par exemple entre environ 0,1 et 10 m/min. Lorsque le piston 12 atteint le couvercle 3, comme représenté à la fig. 2, le processus d'expansion de la section de tuyau 16 est terminé et on arrête l'injection de fluide sous pression. Le fluide d'expansion peut alors être remplacé progressivement par un fluide froid sous pression de façon à refroidir la section de tuyau 16 expansée tout en la maintenant en forme.

Comme exposé précédemment, par un choix approprié des conditions de travail et des matériaux constituant le fourreau 14 et le piston 12, un étirage longitudinal de la section de tuyau 16 est provoqué par le fourreau 14 et le piston 12, pendant que ceux-ci sont repoussés par le fluide d'expansion introduit en 7. Dans ce cas, on obtient un tuyau biorienté dont la longueur, comme illustré à la fig. 2, est supérieure à celle de la section de tuyau de départ. Le démoulage du tuyau expansé orienté, obtenu à l'issue du procédé peut être facilement obtenu en séparant le couvercle 2 de l'enveloppe tubulaire 1 et en injectant un fluide sous pression par la tubulure 10. De ce fait, le piston 12 est repoussé en direction du couvercle 2 et expulse le tuyau de l'enveloppe tubulaire 1. Après démoulage, le couvercle 2 est séparé du tuyau et un nouveau cycle peut débuter.

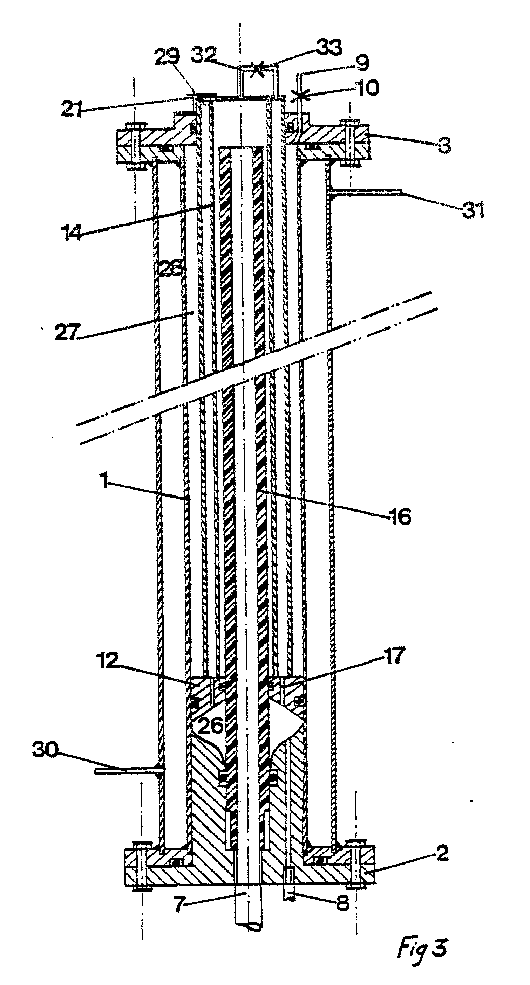

Une autre variante de réalisation de l'appareillage conforme à l'invention est illustré par la fig. 3.

Dans cette variante, l'enveloppe tubulaire 1 et le fourreau 14 sont équipés d'un chemisage 28 respectivement 29. Le chemisage 28 de l'enveloppe 1 comporte deux tubulures 30 et 31 pour l'introduction et l'évacuation d'un fluide réfrigérant. De plus, l'extrémité du fourreau 14 est raccordée directement au chemisage 29 via une tubulure 32 équipée d'une vanne 33. Enfin le piston 12 est équipé de tubulures longitudinales 17 dépourvues de clapet anti-retour et ces tubulures débouchent directement dans le chemisage 29. Pour le reste, cet appareillage est analogue à celui illustré par les figs 1 et 2 et il n'est donc pas nécessaire d'en donner une description plus détaillée.

De même, le placement de la section de tuyau 16 à orienter, dans l'appareillage et la fixation de l'extrémité de cette section de tuyau dans le logement prévu dans le couvercle 2 démeurent analogues à ce qui a été dit en rapport avec l'appareillage décrit en référence aux figs 1 et 2.

Comme exposé plus haut, avant de démarrer le fonctionnement de l'appareillage de la fig. 3, le verrou 21 bloque le fourreau 14 et l'espace 27 compris entre l'enveloppe tubulaire 1 et le chemisage du fourreau 14 contient un fluide incompressible tel que de l'huile injectée via la tubulure 9 avant fermeture de la vanne réglable 10.

On procède alors d'abord au conditionnement thermique de la section de tuyau 16 à sa température d'orientation moléculaire en injectant un fluide à température adéquate via la tubulure 7. Ce fluide circule dans l'appareillage via l'intérieur de la section de tuyau 16, la tubulure 32, la vanne 33 ouverte, le chemisage 29, les tubulures 17 et est évacué par la tubulure 8. Il apparait donc que la section de tuyau 16 est ainsi traitée sur ses deux faces. Après conditionnement thermique, on initie l'expansion de la section de tuyau, en fermant la vanne 33 et en augmentant la pression du fluide introduit par la tubulure 7 ou en substituant au fluide de conditionnement thermique un autre fluide sous pression tel qu'un liquide ou un gaz. De ce fait, la portion de la section de tuyau 16, enfermée dans l'espace 26 compris entre le couvercle 2 et le piston 12 est déformée par la pression interne du fluide d'expansion et s'applique sur le contour interne de cette chambre. Il apparait en outre que la paroi de la section de tuyau 16 ainsi mise en contact avec l'enveloppe 1 est directement refroidie par l'intermédiaire du chemisage 28.

Pour contrôler ensuite l'expansion progressive de toute la section de tuyau 16 il suffit alors de débloquer le verrou 21 et de provoquer l'évacuation progressive du fluide enfermé dans la chambre 27 par la tubulure 9 en réglant l'ouverture de la vanne 10.

De ce fait, le piston se déplace progressivement vers le couvercle 3 tout en contrôlant l'expansion progressive de la section de tuyau 16.

Dans cet appareillage également, la section de tuyau 16 reste centrée et soutenue dans l'axe du moule jusqu'au moment de son expansion totale, par l'intermédiaire du fourreau 14 et de l'ouverture centrale prévue dans le piston 12.

Au fur et à mesure de l'expansion, la paroi externe de la section de tuyau en voie d'expansion radiale vient en contact avec l'enveloppe tubulaire 1 et est refroidie par l'intermédiaire du chemisage 28.

Lorsque la section de tuyau est complètement expansée, le piston 12 se trouve à proximité du couvercle 3. A ce moment l'injection du fluide sous pression via la tubulure 7 est interrompue et éventuellement remplacée par un fluide froid sous pression pour parfaire, si nécessaire, le refroidissement du tuyau orienté, à une température autorisant son démoulage.

Le démoulage du tuyau peut être obtenu de façon similaire à celle décrite pour l'appareillage des figs 1 et 2 et notamment en réinjectant le fluide incompressible dans l'espace 27 via la tubulure 9.

Il convient encore de noter que l'appareillage de la fig. 3 permet également un éventuel étirage longitudinal de la section de tuyau 16 en engendrant également un étirage longitudinal de la section de tuyau 16 durant l'expansion progressive et partant la production d'un tuyau biorienté.

**Revendications**

1. Procédé pour la fabrication de tuyaux en matière plastique orientée moléculairement, selon lequel on place une section de tuyau dans un moule, on provoque l'expansion radiale de la section de tuyau portée à une température à laquelle un étirage induit une orientation moléculaire de la matière plastique au moyen d'un fluide que l'on introduit sous pression dans la section de tuyau après avoir obturé celle-ci à ses deux extrémités, on refroidit le tuyau résultant et on l'extrait du moule, caractérisé en ce qu'on enserre la section de tuyau (16) dans un fourreau (14), on provoque un déplacement relatif du fourreau (14) le long de la section de tuyau (16) pendant qu'on y introduit le fluide, de manière à provoquer l'expansion radiale de la partie de la section de tuyau (16) qui est progressivement libérée par le fourreau (14) et on règle le frottement du fourreau (14) sur la section de tuyau (16) et son déplacement relatif le long de la section de tuyau (16) pour engendrer un étirage longitudinal de la section de tuyau (16).

2. Procédé selon la revendication 1, caractérisé en ce qu'on fait glisser une zone en cours d'expansion radiale de la section de tuyau (16) sur une surface annulaire disposée à la sortie du fourreau (14) et s'étendant vers la paroi interne du moule (1).

3. Procédé selon la revendication 1 ou 2, caractérisé en ce qu'on met en œuvre, pour l'expansion radiale de la section de tuyau (16), un fluide dont la température est sensiblement égale à la température d'orientation moléculaire de la matière plastique.

4. Procédé selon l'une quelconque des revendications 1 à 3, caractérisé en ce qu'on met en œuvre une section de tuyau (16) en résine à base de chlorure de vinyle que l'on porte à une température comprise entre 90 et 130 °C avant son expansion radiale.

5. Appareillage pour la fabrication de tuyaux en matière plastique orientée moléculairement, par expansion radiale d'une section de tuyau, conformément au procédé selon l'une quelconque des revendications 1 à 4, comprenant un moule tubulaire (1) dont les dimensions transversales correspondent à celles du tuyau à produire et qui est équipé d'un dispositif (7) d'admission d'un fluide sous pression dans une zone du moule (1) destinée à recevoir la section de tuyau à expanser radialement, d'un organe d'obturation et de préhension (6) d'une extrémité de la section de tuyau dans le moule, d'un fourreau tubulaire (14) qui débouche dans le moule (1) par une extrémité ouverte en regard de l'organe d'obturation et de préhension (6) et qui présente des dimensions transversales correspondant à celles de la section de tuyau qu'il est destiné à recevoir, et d'un moyen (1) (3) (7) (9) (12) pour provoquer un déplacement axial relatif contrôlé du fourreau (14) par rapport à l'organe d'obturation et de préhension (6), pour les écarter l'un de l'autre et extraire la section de tuyau du fourreau (14), caractérisé en ce que l'extrémité ouverte du fourreau (14) est équipée d'un piston annulaire (12) monté à coulissement dans le moule et qui enserre la section de tuyau (16) de manière que l'on puisse régler le frottement dudit fourreau (14) sur ladite section de tuyau (16) pour engendrer un étirage longitudinal de la section de tuyau (16) par un déplacement relatif réglable dudit fourreau (14) le long de la section de tuyau (16).

6. Appareillage selon la revendication 5, caractérisé en ce que le piston annulaire (12) présente une surface de forme générale tronconique évasée en direction de l'organe d'obturation et de préhension (6).

7. Appareillage selon la revendication 5, caractérisé en ce que le fourreau (14) est obturé à une extrémité et en ce que le moyen pour provoquer le déplacement axial relatif contrôlé du fourreau (14) par rapport à l'organe d'obturation et de préhension (6) comprend d'une part le dispositif (7) d'admission de fluide auquel l'organe d'obturation et de préhension est solidarisé et, d'autre part, un dispositif d'amortissement du déplacement (1) (3) (9) (12).

8. Appareillage selon la revendication 7, caractérisé en ce que le dispositif d'amortissement comprend un second piston (3) solidaire du moule (1) et monté à coulissement sur le fourreau (14) et un conduit calibré (9) d'échappement d'un fluide emprisonné dans la chambre annulaire (27) à volume variable délimitée entre le fourreau (14), le moule (1) et les deux pistons (3) (12).

9. Appareillage selon la revendication 8, caractérisé en ce que l'organe d'obturation et de préhension (6) est solidaire d'un couvercle (2) d'obturation du moule (1), le dispositif d'admission de fluide dans le moule comprend une tubulure (7) ménagée à travers l'organe d'obturation et de préhension (6) et le conduit calibré d'échappement (9) est ménagé à travers le piston annulaire (3) solidaire du moule (1), en ce que l'extrémité obturée du fourreau est percée d'une tubulure (20) munie d'une vanne d'obturation, et en ce qu'un moyen d'admission d'un fluide dans la chambre annulaire (27) précitée comprend une tubulure longitudinale (17) traversant le piston (12) solidaire du fourreau (14) et un conduit (8) traversant la paroi (2) du moule (1) et débouchant dans celui-ci en dehors de la chambre annulaire (27).

10. Appareillage selon l'une quelconque des revendications 5 à 9, caractérisé en ce que le fourreau (14) est entouré d'une chemise (29) destinée à contenir un fluide chaud, à une température approximativement égale à celle de la section de tuyau à expanser et en ce que le moule (1) est entouré d'une chemise (28) destinée à contenir un fluide de refroidissement.

## Claims

1. Process for the manufacture of molecularly oriented plastic pipes, according to which a pipe section is placed in a mould, radial expansion is produced of the pipe section which is heated to a temperature at which drawing induces molecular orientation of the plastic by means of a fluid which is introduced under pressure into the pipe section after the latter has been closed at both its ends, the resulting pipe is cooled and extracted from the mould, the said process being characterized in that the pipe section (16) is clamped in a sleeve (14), a relative displacement of the sleeve (14) along the pipe section (16) is produced while fluid is being introduced therein, so as to cause radial expansion of the part of the pipe section (16) which is gradually released by the sleeve (14) and the friction of the sleeve (14) on the pipe section (16) and its relative displacement along the pipe section (16) is regulated to give rise to lengthwise drawing of the pipe section (16).

2. Process according to Claim 1, characterized in that a pipe section (16) zone which is being radially expanded is caused to slide over an annular surface arranged at the exit of the sleeve (14) and extending towards the inner wall of the mould (1).

3. Process according to Claim 1 or 2, characterized in that a fluid whose temperature is substantially equal to the temperature of molecular orientation of the plastic is used for the radial expansion of the pipe section (16).

4. Process according to any one of Claims 1 to 3, characterized in that a pipe section (16) made of a resin based on vinyl chloride, which is heated to a temperature between 90 and 130 °C before its radial expansion is used.

5. Apparatus for the manufacture of pipes made of a molecularly oriented plastic by radial expansion of a pipe section, in accordance with a process according to any one of Claims 1 to 4, comprising a tubular mould (1) whose transverse dimensions correspond to those of the pipe to be produced and which is equipped with a device (7) for admitting a fluid under pressure into a region of the mould (1) intended to receive the pipe section to be radially expanded, a member for closing and grasping (6) one end of the pipe section in the mould, a tubular sleeve (14) which opens into the mould (1) by an open end facing the closing and grasping member (6) and which has transverse dimensions corresponding to those of the pipe section which it is intended to receive, and a means (1) (3) (7) (9) (12) for producing a controlled relative axial displacement of the sleeve (14) in relation to the closing and grasping member (6), for moving them apart and for gradually extracting the pipe section from the sleeve (14), characterized in that the open end of the sleeve (14) is equipped with an annular plunger (12) mounted so as to slide in the mould and which enclasps the pipe section (16) so that the friction of the said sleeve (14) on the said pipe section (16) can be regulated to give rise to lengthwise drawing of the pipe section (16) by a controllable relative displacement of the said sleeve (14) along the pipe section (16).

6. Apparatus according to Claim 5, characterized in that the annular plunger (12) has a generally frustoconical shape widening out in the direction of the closing and grasping member (6).

7. Apparatus according to Claim 5, characterized in that the sleeve (14) is closed at one end and the means for giving rise to the controlled relative axial displacement of the sleeve (14) in relation to the closing and grasping member (6) comprises, on the one hand, the device (7) for admitting fluid, to which the closing and grasping member is integrally connected and, on the other hand, a device for damping the displacement (1) (3) (9) (12).

8. Apparatus according to Claim 7, characterized in that the damping device comprises a second plunger (3) integrally connected to the mould (1) and mounted so as to slide on the sleeve (14) and a calibrated release line (9) for a fluid enclosed in the annular chamber (27) with a variable volume and delimited between the sleeve (14), the mould (1) and the two plungers (3) (12).

9. Apparatus according to Claim 8, characterized in that the closing and grasping member (6) is integrally connected to a cover (2) for closing the mould (1), the device for admitting fluid into the mould comprises a pipe (7) arranged through the closing and grasping member (6) and the calibrated release line (9) is arranged through the annular plunger (3) integrally connected to the mould (1), the open end of the sleeve is pierced by a pipe (20) equipped with a stop valve, and the means for admitting a fluid into the abovementioned annular chamber (27) comprises a lengthwise pipe (17) passing through the plunger (12) integrally connected to the sleeve (14) and a line (8) passing through the wall (2) of the mould (1) and opening into the latter outside the annular chamber (27).

10. Apparatus according to any one of Claims 5 to 9, characterized in that the sleeve (14) is surrounded by a jacket (29) intended to contain a hot fluid at a temperature approximately equal to that of the pipe section to be expanded and the mould (1) is surrounded by a jacket (28) intended to contain a coolant fluid.

**Patentansprüche**

1. Verfahren für die Herstellung von Schläuchen aus molekular orientiertem Kunststoff, gemäss dem man einen Schlauchabschnitt in einer Form anordnet, die radiale Expansion des Schlauchabschnitts gehalten auf einer Temperatur, bei der eine Streckung eine molekulare Orientierung des Kunststoffs induziert, mittels eines Fluids hervorruft, das man unter Druck in den Schlauchabschnitt, nachdem dieser an seinen beiden Enden verschlossen worden ist, einführt, den sich ergebenden Schlauch kühlt und ihn aus der Form entnimmt, dadurch gekennzeichnet, dass man den Schlauchabschnitt (16) in eine Hülse (14) einführt, dass man eine Relativbewegung der Hülse (14) entlang des Schlauchabschnitts (16) bewirkt, während man das Fluid einführt, um die radiale Expansion des Teils des Schlauchabschnitts (16) hervorzurufen, der fortschreitend durch die Hülse (14) freigegeben wird, und dass man die Reibung der Hülse (14) auf dem Schlauchabschnitt (16) und ihre Relativbewegung entlang des Schlauchabschnitts (16) regelt, um eine Längsstreckung des Schlauchabschnitts (16) zu verursachen.

2. Verfahren nach Anspruch 1, dadurch gekennzeichnet, dass man im Laufe der radialen Expansion des Schlauchabschnitts (16) eine Zone auf einer Ringfläche gleiten lässt, die am Ausgang der Hülse (14) angeordnet ist und sich in Richtung auf die Innenwand der Form (1) erstreckt.

3. Verfahren nach Anspruch 1 oder 2, dadurch gekennzeichnet, dass man für die radiale Expansion des Schlauchabschnitts (16) ein Fluid verwendet, dessen Temperatur im wesentlichen gleich der molekularen Orientierungstemperatur des Kunststoffs ist.

4. Verfahren nach irgendeinem der Ansprüche 1 bis 3, dadurch gekennzeichnet, dass man einen Schlauchabschnitt (16) aus Harz auf der Basis von Vinylchlorid verwendet, das man auf eine Temperatur zwischen 90 und 130 °C vor seiner radialen Expansion bringt.

5. Vorrichtung für die Herstellung von Schläuchen aus molekular orientiertem Kunststoff, durch radiale Expansion eines Schlauchabschnitts, nach dem Verfahren nach irgendeinem der Ansprüche 1 bis 4, bestehend aus einer rohrförmigen Form (1), deren Querabmessungen denjenigen des herzustellenden Schlauchs entsprechen und die mit einer Einrichtung (7) zur Zuführung eines Fluids unter Druck in eine Zone der Form (1), die zur Aufnahme des radial zu expandierenden Schlauchabschnitts bestimmt ist, mit einem Organ zum Verschliessen und Erfassen (6) eines Endes des Schlauchabschnitts in der Form, mit einer rohrförmigen Hülse (14), die in die Form (1) mit einem hinsichtlich des Organs zum Verschluss und zur Erfassung (6) offenen Ende mündet und die Querabmessungen aufweist, die denjenigen des Schlauchabschnitts entsprechen, den sie aufzunehmen bestimmt ist, und mit einem Mittel (1), (3), (7), (9), (12) zur Hervorrufung einer kontrollierten axialen Relativbewegung der Hülse (14) hinsichtlich des Verschluss- und Erfassungsorgans (6) ausgestattet ist, um sie voneinander getrennt zu halten und den Schlauchabschnitt von der Hülse (14) zu entfernen, dadurch gekennzeichnet, dass das offene Ende der Hülse (14) mit einem Ringkolben (12) ausgestattet ist, der in der Form verschiebbar angeordnet ist und der den Schlauchabschnitt (16) derart einschliesst, dass man die Reibung der Hülse (14) auf dem genannten Schlauchabschnitt (16) regeln kann, um eine Längsstreckung des Schlauchabschnitts (16) durch eine regelbare Relativbewegung der genannten Hülse (14) entlang des Schlauchabschnitts (16) zu verursachen.

6. Vorrichtung nach Anspruch 5, dadurch gekennzeichnet, dass der Ringkolben (12) eine Oberfläche im allgemeinen kegelstumpfförmiger Form aufweist, die in Richtung des Verschluss- und Erfassungsorgans (6) aufgeweitet ist.

7. Vorrichtung nach Anspruch 5, dadurch gekennzeichnet, dass die Hülse (14) an einem Ende verschlossen ist und dass das Mittel zur Bewirkung der kontrollierten axialen Relativbewegung der Hülse (14) gegenüber dem Verschluss- und Erfassungsorgan (6) einerseits über die Einrichtung (7) zur Zuführung von Fluid, mit der das Verschluss- und Erfassungsorgan in Verbindung steht, und andererseits über eine Einrichtung zur Dämpfung der Bewegung (1), (3), (9), (12) verfügt.

8. Vorrichtung nach Anspruch 7, dadurch gekennzeichnet, dass die Dämpfungseinrichtung über einen zweiten Kolben (3), der mit der Form (1) in Verbindung steht und verschiebbar auf der Hülse (14) angeordnet ist, und über eine kalibrierte Leitung (9) zur Abführung eines in der Ringkammer (27) mit veränderbarem Volumen eingeschlossenen Fluids verfügt, die zwischen der Hülse (14), der Form (1) und den beiden Kolben (3), (12) begrenzt ist.

9. Vorrichtung nach Anspruch 8, dadurch gekennzeichnet, dass das Verschluss- und Erfassungsorgan (6) mit einem Verschlussdeckel (2) der Form (1) fest verbunden ist, dass die Einrichtung zur Zuführung von Fluid in die Form in einem Rohr (7) besteht, das quer durch das Verschluss- und Erfassungsorgan (6) hindurch vorgesehen ist, und die kalibrierte Abführungsleitung (9) quer durch den mit der Form (1) festverbundenen Ringkolben (3) hindurchgehend vorgesehen ist, dass das verschlossene Ende der Hülse von einem Rohr (20) durchdrungen ist, das mit einem Verschlussschieber ausgestattet ist, und dass ein Mittel zur Zuführung eines Fluids in die vorerwähnte Ringkammer (27) in einem Längsrohr (17), das den mit der Hülse (14) festverbundenen Kolben (12) durchdringt, und in einer Leitung (8) besteht, die die Wand (2) der Form (1) durchdringt und die in dieser ausserhalb der Ringkammer (27) mündet.

10. Vorrichtung nach irgendeinem der Ansprüche 5 bis 9, dadurch gekennzeichnet, dass die Hülse (14) von einem Kanal (29) umgeben ist, der zur Aufnahme eines warmen Fluids bei einer Temperatur angenähert gleich derjenigen des zu expandierenden Schlauchabschnitts bestimmt ist, und dass die Form (1) von einem Kanal (28) umgeben ist, der zur Aufnahme eines Kühlfluids bestimmt ist.

Fig 1

Fig 2

Fig 3